(19) Europäisches Patentamt
European Patent Office
Office européen des brevets

(11) **EP 1 923 600 B1**

(12) **EUROPÄISCHE PATENTSCHRIFT**

(45) Veröffentlichungstag und Bekanntmachung des Hinweises auf die Patenterteilung:
**19.09.2018 Patentblatt 2018/38**

(51) Int Cl.:
**F16F 15/28** *(2006.01)*

(21) Anmeldenummer: 06124387.9

(22) Anmeldetag: **20.11.2006**

(54) **Gegengewichtsanordnung für einen Verbrennungsmotor in einem Kraftfahrzeug**

Counterweight system for an internal combustion engine in a motor vehicle

Dispositif de contrepoids destiné à un moteur à combustion dans un véhicule automobile

(84) Benannte Vertragsstaaten:
**DE FR GB**

(43) Veröffentlichungstag der Anmeldung:
**21.05.2008 Patentblatt 2008/21**

(73) Patentinhaber: **Ford Global Technologies, LLC Dearborn, MI 48126 (US)**

(72) Erfinder:
• **Stoffels, Harald**
  **50733 Köln (DE)**
• **Quiring, Stefan**
  **51371 Leverkusen (DE)**
• **Kuepper, Klaus**
  **41539 Dormagen (DE)**

(74) Vertreter: **Illing, Rolf et al
Ford-Werke GmbH
Patentabteilung NH-364
Henry-Ford-Straße 1
50735 Köln (DE)**

(56) Entgegenhaltungen:
**DE-A1- 10 245 376     JP-A- 4 249 637
JP-A- 55 006 035**

**Beschreibung**

Die Erfindung betrifft ein Verfahren zur Optimierung des Schwingungsverhaltens in einem Verbrennungsmotor mit drei Zylindern.

Derartige Gegengewichtsanordnungen dienen dazu, die bei einem Verbrennungsmotor auftretenden Vibrationen zu verringern oder zu verhindern, welche in einem Dreizylindermotor insbesondere in Form eines Trägheitskräftepaars von dem ersten und dem dritten Zylinder auf die Kurbelwelle ausgeübt werden.

Aus der DE 32 32 027 A1 ist eine Gegengewichtsanordnung für Verbrennungskraftmaschinen mit drei Zylindern bekannt, bei der zum einen eine Vorlegewelle mit an ihren beiden Enden starr befestigten Ausgleichsgewichten vorgesehen ist, die mit der gleichen Drehzahl wie die Kurbelwelle sowie in zu dieser entgegen gesetzter Richtung umläuft, und bei der zusätzlich an beiden Enden der Kurbelwelle Gegengewichte befestigt sind, um die hin- und hergehenden bzw. rotierenden Massen auszugleichen.

Aus FR 2 779 493 A1 ist eine Kurbelwelle bekannt, welche eine Mehrzahl von Kurbelkröpfungen sowie an einem Ende ein Trägheitsschwungrad aufweist, das in einem Bereich eine Materialaussparung aufweist, um eine erste aus dem Gleichgewicht exzentrisch wirkende Kraft (Schwerpunktskraft) zu erzeugen, und bei der axial beabstandet zu dem Trägheitsschwungrad ein Bereich mit zusätzlichem Material bzw. zusätzlicher Masse vorgesehen ist, um eine zweite aus dem Gleichgewicht exzentrisch wirkende Kraft (Schwerpunktskraft) zu erzeugen.

Aus der DE 44 43 707 A1 ist eine schwingungsarme Dreizylinder-Reihen-Brennkraftmaschine bekannt, bei der die Kurbelkröpfungen für die drei Kolben in einer gemeinsamen Ebene liegen, wobei die Kröpfungen für die beiden äußeren Kolben gegenüber der Kröpfung für den mittleren Kolben einen Kurbelwinkel von 180° bilden und wobei die Abmessungen des mittleren Kolbens der Summe der Abmessungen der äußeren Kolben entsprechen.

Aus DE 102 45 376 A1 ist eine Kurbelwelle für eine Reihen-Dreizylinder-Hubkolbenmaschine bekannt, bei der zur Verringerung der Lagerbelastungen der Kurbelwellenlager lediglich zwei Ausgleichsmassen vorgesehen sind, welche einen Winkel von 180° bilden und gleich große und entgegen gesetzte Ausgleichskräfte erzeugen, wobei die von den Ausgleichskräften gebildete Ausgleichsebene mit der ersten Kurbelkröpfung einen Winkel von 30° bildet.

Aus JP 55 006035 A ist eine Ausgleichsvorrichtung für einen Verbrennungsmotor mit drei Zylindern bekannt, wobei den beiden äußeren von insgesamt drei Kurbelkröpfungen jeweils Gegengewichte zugeordnet sind, wobei diese beiden Gegengewichte jeweils in Bezug auf die zugeordnete Kurbelkröpfungsebene um einen Winkel von 30° verdreht sind.

Bei einem Verbrennungsmotor ohne Ausgleichswelle werden die auftretenden Vibrationen durch Gegengewichte, die mit dem der ersten bzw. dritten Kurbelkröpfung bzw. mit dem ersten und dem dritten Zylinder einen Winkel von 30° bilden, dann jedoch nicht auf ein Minimum reduziert, wenn - wie bei einem quereingebauten Antriebstrang üblicherweise der Fall - die Kurbelwellenachse nicht mit der Hauptachse der Trägheitsmatrix des Antriebsstranges übereinstimmt, wenn also die Trägheitsmatrix Nichtdiagonalelemente aufweist, die ungleich Null sind.

Eine Aufgabe der vorliegenden Erfindung besteht darin, ein verfahren zur optimierung des schwingungsverhaltens in einem verbrennungsmotor vorzuschlagen, welche eine effektivere Reduzierung der im Verbrennungsmotor auftretenden Vibrationen ermöglicht, auch wenn die Kurbelwellenachse nicht mit der Hauptachse der Trägheitsmatrix des Antriebsstranges übereinstimmt.

Diese Aufgabe wird gemäß den Merkmalen des unabhängigen Patentanspruches 1 gelöst.

Der vorliegenden Erfindung liegt die Erkenntnis zugrunde, dass die optimale Masse und die optimale Position der Gegengewichte in einer Gegengewichtsanordnung für einen Dreizylindermotor unmittelbar von der Trägheitsmatrix des Antriebsstranges und den oszillierenden Massen abhängig sind. Genauer hat die Trägheitsmatrix des Antriebsstranges dann einen wesentlichen Einfluss auf die Position und Masse der Gegengewichte, falls die Rotationsachse der Kurbelwelle nicht mit der Hauptträgheitsachse der Trägheitsmatrix des Antriebsstranges übereinstimmt.

Eine Verringerung der im Verbrennungsmotor auftretenden Vibrationen wird gemäß der Erfindung dadurch erreicht, dass Position und Masse der Gegengewichte in Abhängigkeit von der Trägheitsmatrix des Antriebsstranges bestimmt werden und bewusst von der üblichen 30°-Position der Gegengewichte relativ zu dem ersten und dritten Zylinder bzw. relativ zu der zugeordneten Kurbelkröpfung abgewichen wird, um optimale NVH-Eigenschaften (NVH= "noise, vibration and harshness") zu erzielen.

Die Erfindung betrifft ein Verfahren zur Optimierung des Schwingungsverhaltens in einem Verbrennungsmotor mit drei Zylindern gemäß den Merkmalen des unabhängigen Anspruchs 5.

Weitere Ausgestaltungen der Erfindung sind der Beschreibung sowie den Unteransprüchen zu entnehmen.

Die Erfindung wird nachstehend anhand bevorzugter Ausführungsformen unter Bezugnahme auf die beigefügten Abbildungen erläutert. Es zeigen:

Figur 1         eine schematische Darstellung einer mit einer erfindungsgemäßen Gegengewichtsanordnung versehenen Kurbelwelle für einen Verbrennungsmotor mit drei Zylindern; und

Figur 2 bis 4    Diagramme zur Darstellung der Abhängigkeit der Drehbeschleunigung von der Position und Masse der Gegengewichte für einen idealen Fall mit verschwindenden Elementen der Nebendiagonalen der Trägheitsmatrix (Figur 2b und 4a, b) sowie einen realen Fall mit nicht verschwindenden Elementen der Nebendiagonalen der Trägheitsmatrix (Figur 2a und 3a, b).

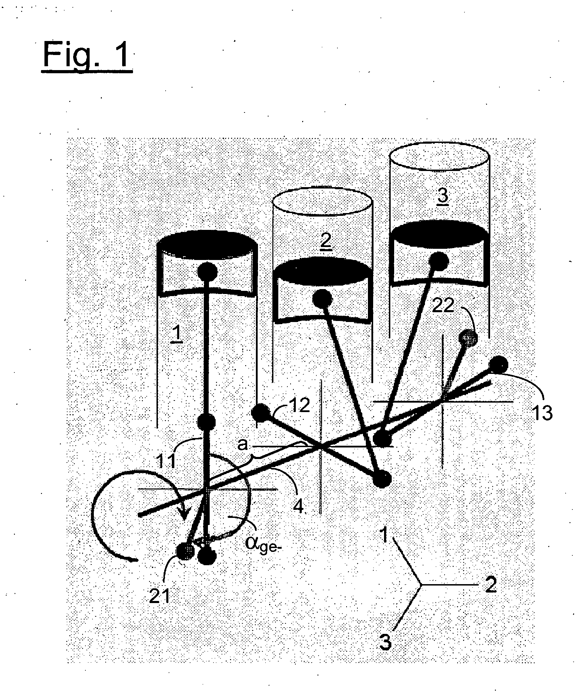

In Fig. 1 ist zunächst lediglich schematisch eine erfindungsgemäße, mit einer zwei Gegengewichte 21 und 22 umfassenden Gegengewichtsanordnung versehene Kurbelwelle für einen Verbrennungsmotor mit drei Zylindern 1, 2 und 3 dargestellt.

Die Kurbelwelle rotiert im Betrieb des Verbrennungsmotors um eine Rotationsachse 4 und weist in axialer Richtung in Bezug auf die Rotationsachse 4 drei aufeinander folgende und in Fig. 1 vereinfacht linear dargestellte Kurbelkröpfungen 11, 12 und 13 auf, die in Winkelabständen von 120° um die Rotationsachse 4 herum verteilt sind. Die Gegengewichte 21 und 22 dienen zum wenigstens teilweisen Ausgleich der von den umlaufenden Massen an der Kurbelwelle hervorgerufenen Trägheitskräfte und sind zueinander in einem Winkel von 180°, d.h. in einer gemeinsamen Ebene, welche senkrecht zur Rotationsachse 4 verläuft, angeordnet. Der Winkel, um den das erste Gegengewicht 21 der beiden Gegengewichte 21 und 22 in Bezug auf die zugeordnete Kurbelkröpfung 11 um die Kurbelwellenachse 4 verdreht ist, ist mit $\alpha_{gegen}$ bezeichnet.

Aus dem in den beigefügten Abbildungen ist ersichtlich, dass optimale NVH-Eigenschaften (NVH= "noise, vibration and harshness") nicht bei der in herkömmlicher Weise verwendeten, eingangs beschriebenen 30°-Position der Gegengewichte relativ zu dem ersten und dem dritten Zylinder erzielt werden, sondern unter hiervon abweichenden Positionen der Gegengewichte.

Im folgenden wird nun anhand eines Ausführungsbeispiels erläutert, wie eine Verringerung der im Verbrennungsmotor auftretenden Vibrationen gemäß der Erfindung dadurch erreicht wird, dass jeweils eine ideale Position und Masse der Gegengewichte 21, 22 in Abhängigkeit von der Trägheitsmatrix des Antriebsstranges bestimmt wird.

Zwischen der Trägheitsmatrix $\mathbf{I}$ des Antriebs, dem Momentenvektor $\vec{M}$ und dem Winkelbeschleunigungsvektor $\ddot{\vec{\varphi}}$ gilt die folgende Beziehung:

$$\begin{pmatrix} I_{xx} & I_{xy} & I_{xz} \\ I_{yx} & I_{yy} & I_{yz} \\ I_{zx} & I_{zy} & I_{zz} \end{pmatrix} \cdot \begin{pmatrix} \ddot{\varphi}_x \\ \ddot{\varphi}_y \\ \ddot{\varphi}_z \end{pmatrix} = \begin{pmatrix} M_x \\ M_y \\ M_z \end{pmatrix} \qquad (1)$$

woraus für den Winkelbeschleunigungsvektor $\ddot{\vec{\varphi}}$ folgt:

$$\begin{pmatrix} \ddot{\varphi}_x \\ \ddot{\varphi}_y \\ \ddot{\varphi}_z \end{pmatrix} = \begin{pmatrix} I_{xx} & I_{xy} & I_{xz} \\ I_{yx} & I_{yy} & I_{yz} \\ I_{zx} & I_{zy} & I_{zz} \end{pmatrix}^{-1} \cdot \begin{pmatrix} M_x \\ M_y \\ M_z \end{pmatrix} \qquad (2)$$

Der Momentenvektor $\vec{M}$ ergibt sich allgemein aus der Geometrie des Kurbeltriebs, den oszillierende Massen $m_{osz}$ und den Massen $m_{gegen}$ der Gegengewichte 21 und 22 für den vorliegenden Fall ohne Ausgleichswelle wie folgt:

$$M_{vert} = 1.5 \cdot m_{osz} \cdot r \cdot \omega^2 \cdot a - 2 \cdot m_{gegen} \cdot r \cdot \omega^2 \cdot a \cdot \cos(\alpha_{gegen}) \qquad (3)$$

$$M_{hor} = 2 \cdot m_{gegen} \cdot r \cdot \omega^2 \cdot a \cdot \sin(\alpha_{gegen}) \hspace{2cm} (4)$$

Dabei bezeichnet die Variable a den in Fig. 1 eingezeichneten Bohrungsabstand, $m_{osz}$ die oszillierende Masse in jeweils einem der Zylinder 1, 2 und 3, $m_{gegen}$ die Masse jedes der Gegengewichte 21 und 22, $\alpha_{gegen}$ den in Fig. 1 eingezeichneten Winkel des Gegengewichtes 21 relativ zu der zugeordneten Kurbelkröpfung, $\omega$ die Winkelgeschwindigkeit der Kurbelwellendrehung und r den Kurbelwellenradius. Um die Momente für 360° Kurbelwellendrehung zu berücksichtigen, sind die Momente komplex, d.h. jeweils mit einem Real- und einem Imaginärteil, zu betrachten, da die Kurbelwellenposition mit der größten Anregung in Abhängigkeit von den beteiligten Massen variiert.

Im nachfolgend beschriebenen Ausführungsbeispiel wird nun von folgender, beispielhafter Trägheitsmatrix **I** des Antriebes ausgegangen:

$$I = \begin{pmatrix} 10 & 1 & 2 \\ 1 & 5 & -1 \\ 2 & -1 & 8 \end{pmatrix} \hspace{2cm} (5)$$

wobei für die obigen Variablen die Werte a=0.08m, $m_{osz}$= 0.5kg und r=0.05m zugrunde gelegt werden.

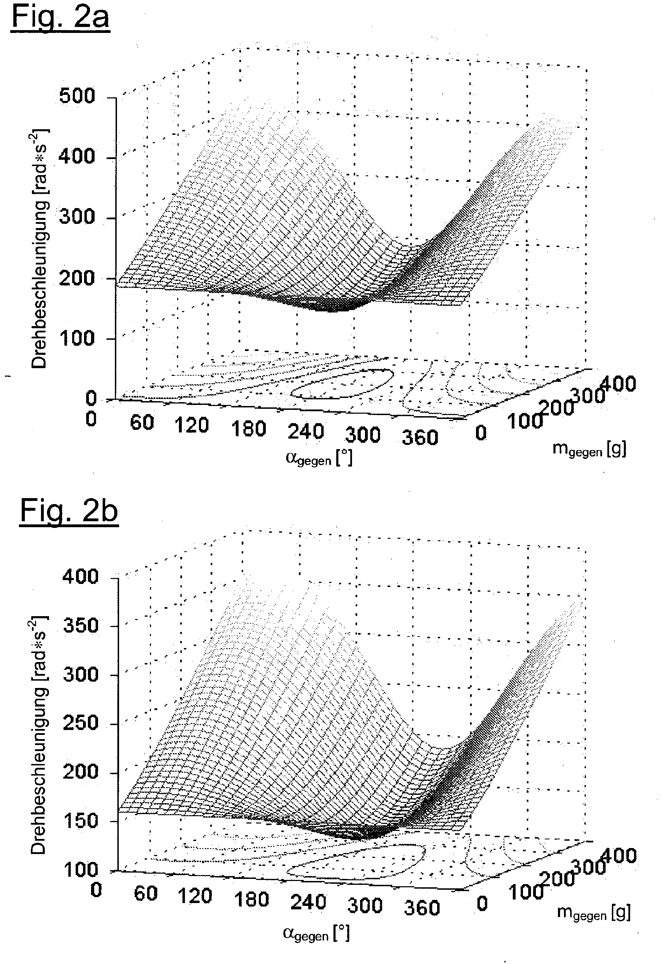

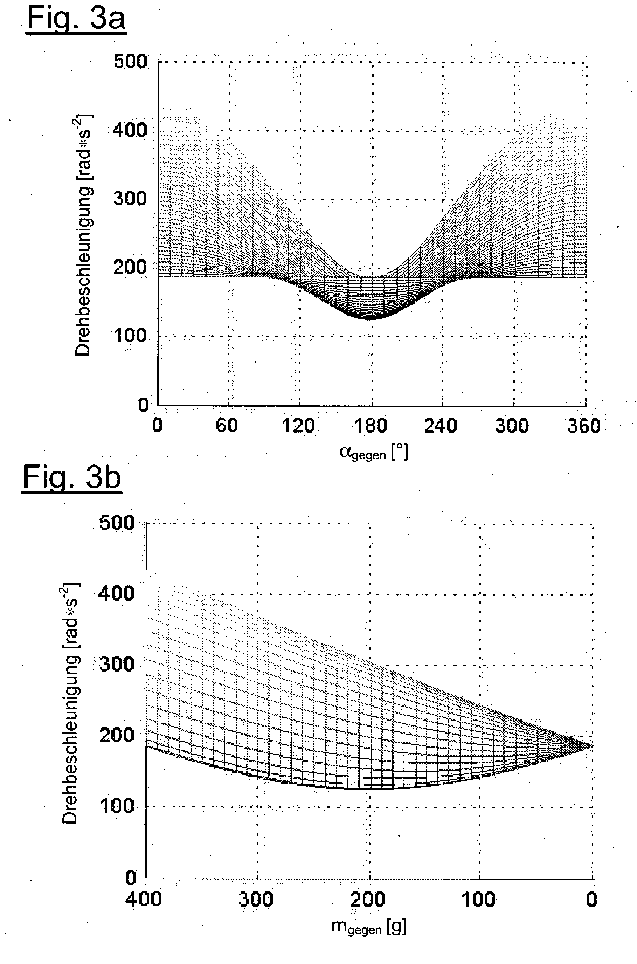

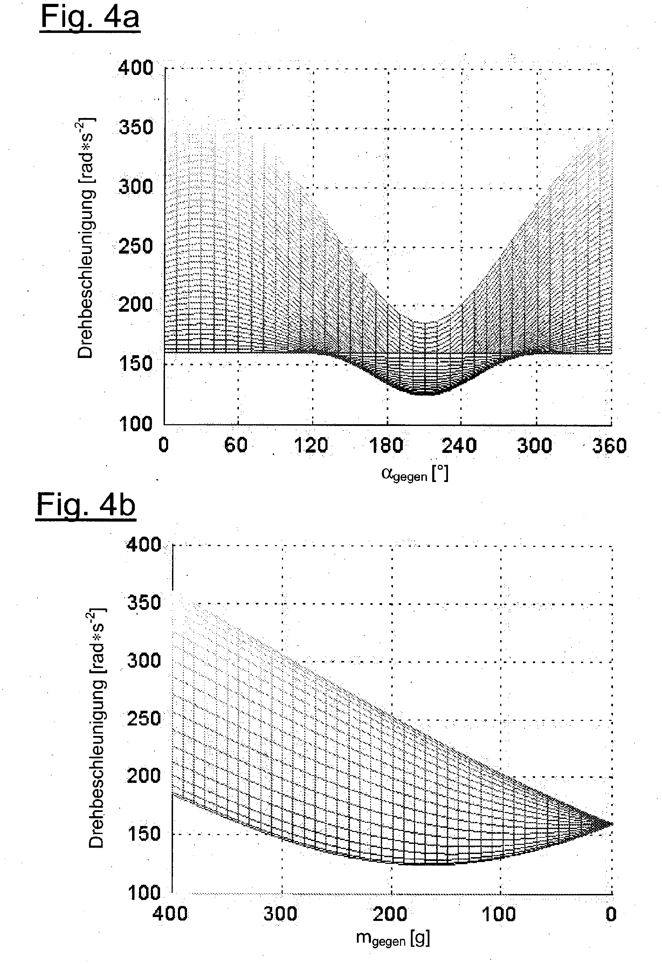

In den Fig. 2 - 4 ist nun für dieses Ausführungsbeispiel der Verlauf des Betrages des Winkelbeschleunigungsvektors (auch Drehbeschleunigung) $|\ddot{\vec{\varphi}}| = \sqrt{\ddot{\varphi}_x{}^2 + \ddot{\varphi}_y{}^2 + \ddot{\varphi}_z{}^2}$ in Abhängigkeit von der Position und Masse der Gegengewichte 21 und 22 aufgetragen, und zwar in Fig. 2a und Fig. 3a, b für den obigen (realen) Fall mit nicht verschwindenden Elementen der Nebendiagonalen der Trägheitsmatrix **I** und in Fig. 2b und Fig. 4a, b für einen Fall mit verschwindenden Elementen der Nebendiagonalen der Trägheitsmatrix **I** (d. h. nur die Hauptdiagonalelemente der o.g. Trägheitsmatrix **I** werden berücksichtigt und alle Nebendiagonalelemente in Gleichung (5) werden gleich Null gesetzt). Hierbei wird der gesamte Antrieb jeweils als starrer Körper angenommen.

Aus dem Vergleich von Fig. 3a mit Fig. 4a ist ersichtlich, dass sich die Position des Minimums des Betrages der Drehbeschleunigung in Abhängigkeit von der Trägheitsmatrix **I** verändert. Während sich gemäß Fig. 4a im (idealen) Fall mit verschwindenden Elementen der Nebendiagonalen der Trägheitsmatrix **I** das Minimum der Drehbeschleunigung für einen Winkel von $\alpha_{gegen}$=210°=0.2165kg und eine Gegengewichtsmasse von $m_{gegen} = \frac{1}{4} \cdot \sqrt{3} \cdot m_{osz}$ ergibt, ergibt sich im realen Fall mit nicht verschwindenden Elementen der Nebendiagonalen der Trägheitsmatrix **I** in Gleichung (5) das Minimum der Drehbeschleunigung bei einem Winkel von $\alpha_{gegen}$=178° und eine Gegengewichtsmasse von $m_{gegen}$= 0.203 kg.

Gemäß der Erfindung wird der Betrag des Winkelbeschleunigungsvektors (Drehbeschleunigung) $|\ddot{\vec{\varphi}}| = \sqrt{\ddot{\varphi}_x{}^2 + \ddot{\varphi}_y{}^2 + \ddot{\varphi}_z{}^2}$ in Abhängigkeit von der Position und Masse der Gegengewichte bestimmt und die Position (d. h. der Winkel $\alpha_{gegen}$) und Gegengewichtsmasse $m_{gegen}$ werden so gewählt, dass sich für die Drehbeschleunigung ein Minimum ergibt.

Fall 1:

Für den idealen Fall mit verschwindenden Elementen der Nebendiagonalen in der Trägheitsmatrix **I** ergeben sich mit den optimierten Parametern ($\alpha_{gegen}$=210°, $m_{ge\text{-}gen}$= 0.2165 kg, r= 0.05m und a=0.08m) folgende Vektoren der Anregungsmomente:

$$M_{real} = \begin{pmatrix} 695{,}01 \\ 0 \\ -401{,}24 \end{pmatrix} Nm \qquad\qquad M_{imaginär} = \begin{pmatrix} -401{,}26 \\ 0 \\ 694{,}96 \end{pmatrix} Nm$$

Hieraus ergibt sich mit o.g. Trägheitsmatrix **I** für die Drehbeschleunigungsvektoren

$$\ddot{\varphi}_{real} = \begin{pmatrix} 88{,}041 \\ -32{,}863 \\ -76{,}273 \end{pmatrix} \frac{rad}{s^2} \qquad\qquad \ddot{\varphi}_{imaginär} = \begin{pmatrix} -22{,}359 \\ -12{,}086 \\ -82{,}792 \end{pmatrix} \frac{rad}{s^2}$$

und somit

$$\ddot{\varphi} = \sqrt{\ddot{\varphi}_{real}^{\,2} + \ddot{\varphi}_{imaginär}^{\,2}} = \begin{pmatrix} 90{,}853 \\ 35{,}01 \\ 112{,}57 \end{pmatrix} \frac{rad}{s^2}$$

$$\ddot{\varphi}_{RSS} = \sqrt{\ddot{\varphi}_x^{\,2} + \ddot{\varphi}_y^{\,2} + \ddot{\varphi}_z^{\,2}} = 148{,}82 \frac{rad}{s^2}$$

wobei mit $\ddot{\varphi}_{RSS}$ der Betrag des Winkelbeschleunigungsvektors (Drehbeschleunigung) bezeichnet ist. Berechnet man diesen Fall 1 statt mit o.g. Trägheitsmatrix **I** unter der Annahme, dass sämtliche Nebendiagonalelemente der Trägheitsmatrix **I** gleich Null sind (d.h. berücksichtigt man nur die Hauptdiagonale der Trägheitsmatrix **I**), so ergibt sich für

$$\ddot{\varphi}_{RSS} = 128{,}46 \frac{rad}{s^2}.$$

Fall 2:

Für den realen Fall mit nicht verschwindenden Elementen der Nebendiagonalen in der o.g Trägheitsmatrix **I** ergeben sich mit den optimierten Parametern ($\alpha_{ge\text{-}gen}$=178°, $m_{gegen}$= 0.203 kg, r= 0.05m und a=0.08m) folgende Vektoren der Anregungsmomente:

$$M_{real} = \begin{pmatrix} 637{,}99 \\ 0 \\ 26{,}26 \end{pmatrix} Nm \qquad\qquad M_{imaginär} = \begin{pmatrix} -828{,}76 \\ 0 \\ -751{,}98 \end{pmatrix} Nm$$

Hieraus ergibt sich für die Drehbeschleunigungsvektoren

$$\ddot{\varphi}_{real} = \begin{pmatrix} 68,695 \\ -16,941 \\ -16,009 \end{pmatrix} \frac{rad}{s^2} \qquad \ddot{\varphi}_{imaginär} = \begin{pmatrix} -67,178 \\ -2,0563 \\ -77,46 \end{pmatrix} \frac{rad}{s^2}$$

und somit

$$\ddot{\varphi} = \sqrt{\ddot{\varphi}_{real}^2 + \ddot{\varphi}_{imaginär}^2} = \begin{pmatrix} 96,08 \\ 17,065 \\ 79,096 \end{pmatrix} \frac{rad}{s^2}$$

$$\ddot{\varphi}_{RSS} = \sqrt{\ddot{\varphi}_x^2 + \ddot{\varphi}_y^2 + \ddot{\varphi}_z^2} = 125,614 \frac{rad}{s^2}$$

Berechnet man diesen Fall 2 statt mit o.g. Trägheitsmatrix I unter der Annahme, dass sämtliche Nebendiagonalelemente der Trägheitsmatrix I gleich Null sind(d.h. berücksichtigt man nur die Hauptdiagonale der Trägheitsmatrix I), so ergibt sich für $\ddot{\varphi}_{RSS} = 145,5 \frac{rad}{s^2}$ .

Der Betrag des Winkelbeschleunigungsvektors (Drehbeschleunigung) ist somit für den realen Fall mit nicht verschwindenden Elementen der Nebendiagonalen der Trägheitsmatrix I mit den o.g., erfindungsgemäß optimierten Parametern geringer als bei der herkömmlichen Anordnung mit 30°-Winkel der Gegenmasse (entsprechend einem Wert von $\alpha_{gegen}$= 210°) für Reihen-Dreizylindermotoren. Letztere Anordnung mit $\alpha_{gegen}$= 210° entspricht hingegen dem Optimum für den idealen Fall, dass die Nebendiagonalelemente der Trägheitsmatrix gleich Null sind, also die Kurbelwellenachse mit der Hauptträgheitsachse des Antriebs übereinstimmt.

## Patentansprüche

1. Verfahren zur Optimierung des Schwingungsverhaltens in einem Verbrennungsmotor mit drei Zylindern (1, 2, 3), wobei der Verbrennungsmotor eine um eine Rotationsachse (4) rotierende Kurbelwelle mit drei in Bezug auf die Rotationsachse (4) in axialer Richtung aufeinander folgenden und in Winkelabständen von 120° verteilten Kurbelkröpfungen aufweist, und wobei eine Gegengewichtsanordnung mit wenigstens zwei Gegengewichten (21, 22) zum wenigstens teilweisen Ausgleich der von umlaufenden Massen an der Kurbelwelle hervorgerufenen Trägheitskräfte vorgesehen ist,
**dadurch gekennzeichnet, dass**
das Verfahren folgende Schritte aufweist:

   a) Berechnen des Betrages der während der Rotation der Kurbelwelle auftretenden Drehbeschleunigung für unterschiedliche Werte des Winkels zwischen einem (21) der beiden Gegengewichte (21, 22) und einer zugeordneten Kurbelkröpfungsebene; und
   b) Anordnen des betreffenden Gegengewichtes (21) an einer Position, für die im Schritt a) der kleinste Wert der Drehbeschleunigung ermittelt wurde.

2. Verfahren nach Anspruch 1,
**dadurch gekennzeichnet, dass**
das Verfahren ferner folgende Schritte aufweist:

   c) Berechnen des Betrages der während der Rotation der Kurbelwelle auftretenden Drehbeschleunigung für unterschiedliche Werte der Masse ($m_{gegen}$) der beiden Gegengewichte (21, 22); und

6

d) Wählen der Masse ($m_{gegen}$) der beiden Gegengewichte (21, 22) : gleich demjenigen Wert, für den im Schritt c) der kleinste Wert der Drehbeschleunigung ermittelt wurde.

3. Verfahren nach Anspruch 1 oder 2,
**dadurch gekennzeichnet, dass**
wenigstens eines (21) der beiden Gegengewichte (21, 22) an einer Position angeordnet wird, welche in Bezug auf die zugeordnete Kurbelkröpfung um die Kurbelwellenachse (4) derart verdreht ist, dass der Winkel zwischen diesem Gegengewicht und der betreffenden Kurbelkröpfungsebene ungleich 30° ist.

4. Verfahren nach einem der Ansprüche 1 bis 3,
**dadurch gekennzeichnet, dass**
die beiden Gegengewichte (21, 22) um die Kurbelwellenachse (4) um einen Winkel von 180° zueinander verdreht sind.

## Claims

1. Method for optimizing the vibration behavior in an internal combustion engine with three cylinders (1, 2, 3), the internal combustion engine having a crankshaft rotating about an axis of rotation (4), with three cranks which succeed one another in the axial direction with respect to the axis of rotation (4) and are distributed at angular intervals of 120°, a counterweight arrangement with at least two counterweights (21, 22) being provided for at least partial compensation of the inertia forces caused by rotating masses on the crankshaft, **characterized in that** the method has the following steps:

   a) calculation of the amount of the angular acceleration occurring during the rotation of the crankshaft for different values of the angle between one (21) of the two counterweights (21, 22) and an assigned crank plane; and
   b) arrangement of the respective counterweight (21) in a position for which the lowest value of the angular acceleration was determined in step a).

2. Method according to Claim 1, **characterized in that** the method has, furthermore, the following steps:

   c) calculation of the amount of the angular acceleration occurring during the rotation of the crankshaft for different values of the mass ($m_{counter}$) of the two counterweights (21, 22); and
   d) selection of the mass ($m_{counter}$) of the two counterweights (21, 22) equal to that value for which the lowest value for the angular acceleration was determined in step c).

3. Method according to Claim 1 or 2, **characterized in that** at least one (21) of the two counterweights (21, 22) is arranged in a position which is rotated about the crankshaft axis (4) with respect to the assigned crank in such a manner that the angle between this counterweight and the respective crank plane is not equal to 30°.

4. Method according to one of Claims 1 to 3, **characterized in that** the two counterweights (21, 22) are rotated about the crankshaft axis (4) with respect to one another through an angle of 180°.

## Revendications

1. Procédé pour optimiser le comportement vibratoire dans un moteur à combustion interne avec trois cylindres (1, 2, 3), dans lequel le moteur à combustion interne présente un vilebrequin tournant autour d'un axe de rotation (4) avec trois coudes de manivelle se succédant en direction axiale et répartis à des distances angulaires de 120° par rapport à l'axe de rotation (4), et dans lequel il est prévu un dispositif de contrepoids avec au moins deux contrepoids (21, 22) pour l'équilibrage au moins partiel des forces d'inertie exercées sur le vilebrequin par les masses en rotation, **caractérisé en ce que** le procédé comprend les étapes suivantes:

   a) calculer la valeur de l'accélération rotative se produisant pendant la rotation du vilebrequin pour différentes valeurs de l'angle entre un (21) des deux contrepoids (21, 22) et un plan de coude de manivelle associé; et
   b) agencer le contrepoids concerné (21) en une position, pour laquelle on a déterminé à l'étape a) la plus petite valeur de l'accélération rotative.

**2.** Procédé selon la revendication 1, **caractérisé en ce que** le procédé comprend en outre les étapes suivantes:

c) calculer la valeur de l'accélération rotative se produisant pendant la rotation du vilebrequin pour différentes valeurs de la masse ($m_{contre}$) des deux contrepoids (21, 22); et

d) choisir la masse ($m_{contre}$) des deux contrepoids (21, 22) égale à la valeur pour laquelle on a déterminé à l'étape c) la plus petite valeur de l'accélération rotative.

**3.** Procédé selon la revendication 1 ou 2, **caractérisé en ce qu'**au moins un des deux contrepoids (21, 22) est disposé en une position qui est tournée autour de l'axe du vilebrequin (4), par rapport au coude de manivelle associé, de telle manière que l'angle entre ce contrepoids et le plan de coude de manivelle concerné soit différent de 30°.

**4.** Procédé selon l'une quelconque des revendications 1 à 3, **caractérisé en ce que** les deux contrepoids (21, 22) sont tournés l'un par rapport à l'autre d'un angle de 180° autour de l'axe de vilebrequin (4).

# Fig. 1

## Fig. 2a

## Fig. 2b

## Fig. 3a

## Fig. 3b

## Fig. 4a

## Fig. 4b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3232027 A1
- FR 2779493 A1
- DE 4443707 A1
- DE 10245376 A1
- JP 55006035 A